(19) Europäisches Patentamt
European Patent Office
Office européen des brevets

(11) Veröffentlichungsnummer: **0 028 204**
**B1**

# (12) EUROPÄISCHE PATENTSCHRIFT

(45) Veröffentlichungstag der Patentschrift: **29.02.84**

(51) Int. Cl.[3]: **C 08 G 12/42**, C 09 D 3/50, B 05 D 3/02

(21) Anmeldenummer: **80810295.8**

(22) Anmeldetag: **22.09.80**

## (54) Vorverlängerte, verätherte Aminoplast-Harze, Verfahren zu ihrer Herstellung und ihre Verwendung in Oberflächenbeschichtungen.

(30) Priorität: **27.09.79 GB 7933501**

(43) Veröffentlichungstag der Anmeldung: **06.05.81 Patentblatt 81/18**

(45) Bekanntmachung des Hinweises auf die Patenterteilung: **29.02.84 Patentblatt 84/09**

(84) Benannte Vertragsstaaten: **BE DE FR GB IT NL SE**

(56) Entgegenhaltungen: **keine**

(73) Patentinhaber: **CIBA-GEIGY AG**
**Patentabteilung Postfach**
**CH-4002 Basel (CH)**

(72) Erfinder: **Winterbottom, Kenneth**
**103 Duxford Road**
**Whittlesford, Cambridge CB2 4NJ (GB)**

EP 0 028 204 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Vorverlängerte, verätherte Aminoplast-Harze, Verfahren zu ihrer Herstellung und ihre Verwendung in Oberflächenbeschichtungen

Die Erfindung betrifft ein neues Verfahren zur Herstellung von bestimmten Aminoplast-Harzen, insbesondere von vorverlängerten, verätherten Aminoplast-Harzen enthaltend eine oder mehrere Guanamingruppen, diese Harze selbst und ihre Verwendung in Beschichtungsmischungen.

Verätherte Aminoplast-Harze sind im allgemeinen wohl bekannte, im Handel erhältliche Materialien und werden auf zahlreichen Gebieten angewendet, speziell als flüssige oder pulverförmige Beschichtungsmassen. Sie werden in der Weise hergestellt, dass man ein Amid mit einer wässrigen Formaldehydlösung oder einem Formaldehyd-Donor, wie Paraformaldehyd, unter neutralen oder basischen Bedingungen zur Reaktion bringt. Dabei bildet sich das Methylolgruppen aufweisende Amid, d. h. der Aminoplast. Letzterer wird in saurem Milieu mit einem Alkohol veräthert. Derartiges Material wird häufig mit einem alkoholische OH-Gruppen enthaltenden Harz, wie Alkyd-, Polyester- oder Acrylharz, gemischt und in Gegenwart eines sauren Katalysators bei erhöhter Temperatur gehärtet. Im Falle des Einsatzes grösserer Mengen an saurem Katalysator genügt Raumtemperatur für die Härtung. Epoxidharze mit höherem Molgewicht, die sowohl alkoholische OH-Gruppen als auch Epoxidgruppen enthalten, können ebenfalls verwendet werden. Auch Carboxylgruppen und Carbonsäureamidgruppen enthaltende Harze sind als Coreaktanten verwendet worden.

Für bestimmte Anwendungen, wie z. B. für die Herstellung von pulverförmigen Beschichtungsmitteln, ist es sehr erwünscht, dass die verätherten Aminoplastharze bei Raumtemperatur oder leicht erhöhter Temperatur nicht-klebrige Festkörper sind. Viele im Handel erhältliche verätherte Aminoplast-Harze sind bei dieser Temperatur klebrige, hochviskose Flüssigkeiten und können deshalb nicht für Pulverbeschichtungen verwendet werden.

Ferner ist es bekannt, dass die Verträglichkeit der Aminoplast-Harze mit einer Reihe von Coreaktanten und Lösungsmitteln grösstenteils von der Art der Verätherungsgruppe abhängt. Wenn die Verätherungsgruppe von einem niedrigen Alkohol, bevorzugt von Methanol, stammt, kann eine gute Verträglichkeit nicht immer erreicht werden.

Gemäss dem erfindungsgemässen Verfahren können nun verätherte Aminoplast-Harze hergestellt werden, welche bei Raumtemperatur und bei leicht erhöhter Temperatur fest sind und welche mit einer grossen Zahl von Coreaktanten und Lösungsmitteln vollkommen verträglich sind.

Aus der GB-PS 948,853 ist es bekannt, eine modifizierte Aminoplastharz-Mischung in der Weise herzustellen, dass man

1) ein teilweise polymerisiertes Aminotriazinharz aus einem Aldehyd, speziell Formaldehyd, und einem Aminotriazin, welches im allgemeinen Melamin ist aber auch ein Guanamin sein kann, herstellt,

2) eine kleine Menge eines Aminotriazins zu dem teilweise polymerisierten Aminoplast-Harz (welches nicht veräthert ist) zusetzt,

3) den erhaltenen Sirup während kurzer Zeit erhitzt, und

4) den heissen Sirup abkühlt und ihn anschliessend mit einer kleinen Menge eines Amins oder mehrerer Amine versetzt.

Das Produkt wird nur für die Herstellung von Glasfaserlaminaten gebraucht.

GB-PS 1 048 710 beschreibt die Umsetzung von Benzoguanamin und Formaldehyd zur Herstellung eines monomeren Reaktionsproduktes, welches anschliessend unter Zusatz eines Polymerisationskatalysators mit Melamin behandelt wird. Das Produkt ist ebenfalls nicht veräthert.

GB-PS 1 141 972 beschreibt die Umsetzung von Methylolgruppen enthaltendem Melamin mit Acetoguanamin und einem Toluolsulfonamid. Das erhaltene Produkt ist wegen seiner guten Wiederverarbeitungseigenschaften und Rissbeständigkeit für Formkörper und Laminate geeignet. Für Vergleichszwecke wird ein Produkt beschrieben, welches nur aus Methylolgruppen enthaltendem Melamin und Acetoguanamin hergestellt wurde. Dieses Produkt war als Laminierharz ungeeignet, da es entweder nicht pressbar war oder zu Laminaten mit ungenügendem Oberflächenglanz führte. Dieses Produkt, wie auch alle anderen der genannten Patentschrift, war nicht veräthert.

In dem erfindungsgemässen Verfahren werden nun verätherte Methylolgruppen enthaltende Harnstoffe, cyclische Harnstoffe, Carbamate oder Melamine mit einem monomeren Guanamin als Vorverlängerungsmittel unter schwach sauren bis schwach basischen Bedingungen erhitzt. Der Begriff « Vorverlängerung » in seinen verschiedenen Formen ist hier in seinem konventionellen Sinn verwendet und bezieht sich auf ein Verfahren zur Herstellung von im Wesentlichen unvernetzten höhermolekularen Produkten.

Demgemäss betrifft die Erfindung ein Verfahren zur Herstellung eines vorverlängerten, verätherten Aminoplast-Harzes durch Umsetzung

a) eines verätherte N-Methylolgruppen enthaltenden Harnstoffes, cyclischen Harnstoffes, Carbamats oder Melamins der Formel I, II oder III

$$ROCH_2N(R^2)—R^1—N(R^3)CH_2OR \qquad (I)$$

$$\left[ (ROCH_2)_m N(H)_p \text{-COO} \right]_n R^4 \qquad (II)$$

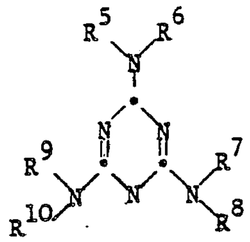

(III)

worin R Wasserstoff oder $C_1$-$C_6$ Alkyl bedeutet, mit der Bedingung, dass mindestens 50 % der Symbole R in den Gruppen $—CH_2OR$ der jeweiligen Formeln I, II oder III Alkyl sind, $R^1$ eine Carbonylgruppe ist und $R^2$ und $R^3$ jeweils gleich oder verschieden sind und Wasserstoff, die Gruppe $—CH_2OR$ oder zusammen eine zweiwertige Alkylkette mit 2 bis 4 C-Atomen bedeuten, wobei die Alkylkette mit 1 oder 2 OH-Gruppen oder mit 1 bis 4 Alkylgruppen mit bis zu 5 C-Atomen substituiert sein kann, oder $R^1$ Methylen oder Aethylen ist und $R^2$ und $R^3$ die Gruppe $-COOR^{11}$ bedeuten, n die Zahl 1 oder 2 ist, und falls n die Zahl 1 ist, p Null bedeutet, m die Zahl 2 ist und $R^4$ $C_1$-$C_{18}$ Alkyl bedeudet, welches mit 1 oder 2 OH-Gruppen oder mit einer $C_1$-$C_5$ Alkoxy-Gruppe substituiert sein kann, oder falls n gleich 2 ist, p Null bedeutet und m die Zahl 2 ist, oder p und m 1 sind, und $R^4$ eine Gruppe $C_qH_{2q}$ ist, worin q eine Zahl von 1 bis 6 bedeutet, oder ein Arylen mit 6 bis 12 C-Atomen darstellt, die Symbole $R^5$ bis $R^{10}$ gleich oder verschieden sind und Wasserstoff oder eine Gruppe $—CH_2OR$ bedeuten, mit der Bedingung, dass nicht mehr als 4 der Symbole $R^5$ bis $R^{10}$ für Wasserstoff stehen, $R^{11}$ Alkyl mit bis zu 18 C-Atomen ist, welches mit 1 oder 2 OH-Gruppen oder mit einer $C_1$-$C_5$ Alkoxy-Gruppe substituiert sein kann, mit

b) einem Guanamin der Formel IV

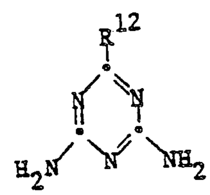

(IV)

worin $R^{12}$ $C_1$-$C_{18}$ Alkyl oder Aralkyl, $C_6$-$C_8$ Aryl oder eine Gruppe der Formel V

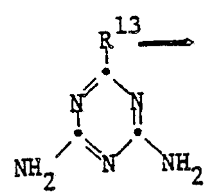

(V)

bedeutet und $R^{13}$ eine Gruppe $C_zH_{2z}$ oder Phenylen bedeutet, wobei z eine Zahl von 2 bis 16 ist, bei einem pH-Wert von 2,5 bis 9, wobei man pro 1 Mol der Komponente a) 0,05 bis 1 Grammäquivalent der Komponente b) einsetzt.

Bedeutet $R^{12}$ Alkyl oder Aralkyl, so besitzt es als Alkyl vorzugsweise 1 bis 12 C-Atome bzw. als Aralkyl vorzugsweise 7 bis 12 C-Atome.

Bedeutet $R^{13}$ eine Gruppe $C_zH_{2z}$, so ist z vorzugsweise 2 bis 6.

Die Vorverlängerungsreaktion wird bevorzugt in Gegenwart eines sauren Katalysators, insbesondere bei einem pH-Wert von 3 bis 6, durchgeführt. Geeignete saure Katalysatoren sind z. B. Ameisensäure, Phosphorsäure und aromatische Sulfonsäuren, wie z. B. Benzolsulfonsäure und insbesondere p-Toluolsulfonsäure. Die Menge an Komponente a), d. h. an verätherte Methylolgruppen enthaltender Verbindung der Formel I, II oder III sowie die Reaktionsbedingungen können je nach den erwünschten physikalischen Eigenschaften des Endproduktes gewählt werden. Grössere Mengen an Komponente a) und längere Reaktionszeiten führen im allgemeinen zu höhermolekularen Materialien mit erhöhtem Schmelzpunktbereich. Bevorzugt wird die Reaktion mit 0,1 bis 0,7 Grammäquivalent der Komponente b) pro 1 Mol der Komponente a) durchgeführt. Ebenfalls bevorzugt wird das Reaktionsgemisch der Komponente a) und b) auf 80 bis 140 °C erhitzt und während 2 bis 6 Stunden auf dieser Temperatur gehalten. Die Umsetzung kann in Gegenwart oder Abwesenheit eines Lösungsmittels erfolgen.

Das Produkt kann durch Entfernung des Lösungsmittels, falls vorhanden, und, falls erwünscht, durch Entfernung des sauren Katalysators nach bekannten Methoden gereinigt werden. Oft ist es jedoch ausreichend, den sauren Katalysator mit einem teriären Amin zu neutralisieren, da die Salze im allgemeinen nicht stören und manchmal sogar die nachfolgende Härtung unterstützen. Das Produkt hat vorzugsweise einen Erweichungspunkt von 50 bis 150 °C, insbesondere 60 bis 120 °C.

Die als Ausgangsverbindungen für das neue Verfahren verwendeten, verätherte Methylolgruppen enthaltenden Verbindungen der Formeln I, II und III [Komponente a)] sind im allgemeinen bekannte Materialien. Ihre Herstellung erfolgt gewöhnlich durch die Umsetzung von 1 Mol einer Amidoverbindung, wie Melamin, Harnstoff, eines cyclischen Harnstoffes oder eines Carbamates der Formel VI oder VII

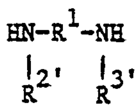 (VI)

$$(H_2N-COO)_n R^4 \quad (VII)$$

worin $R^1$, $R^4$ und n die zuvor genannte Bedeutung haben und $R^{2'}$ und $R^{3'}$ die gleiche Bedeutung haben wie $R^2$ und $R^3$, jedoch nicht für eine Gruppe $—CH_2OH$ oder $-CH_2OR$ stehen können, wobei R die bereits genannte Bedeutung hat, mit mindestens 0,3 Mol Formaldehyd pro austauschbares Wasserstoffatom an der Amidogruppe und unter der Bedingung, dass mindestens 2 Mol Formaldehyd pro 1 Mol Amidoverbindung vorhanden sind. Die Umsetzung erfolgt in alkalischem Milieu, wobei die Methylolierung bei 50 bis 100 °C im allgemeinen nach 1/4 bis 4 Stunden vollständig ist.

Das Reaktionsgemisch wird anschliessend mit mindestens 2 Mol eines gesättigten einwertigen Alkohols mit 1 bis 6 C-Atomen pro Mol Amidoverbindung behandelt. Ein Ueberschuss an Alkohol ist bevorzugt, da der überschüssige Alkohol bei der Reaktion als Lösungsmittel dient.

Das Reaktionsgemisch wird gewöhnlich mit einer starken Säure, wie z. B. Salzsäure, angesäuert, welche vorzugsweise in solchen Mengen zugefügt wird, dass man einen pH-Wert von 1,5 bis 4 erhält. Die Reaktion kann bei Temperaturen von 20 °C bis zum Siedepunkt des Gemisches durchgeführt werden.

Als Komponente b) kommen beispielsweise Adipoguanamin, Succinoguanamin, Caprinoguanamin (d. h. $R^{12}$ ist $CH_3(CH_2)_8—$ in der Formel IV), Benzoguanamin, Acetoguanamin, Butyroguanamin oder Phenylacetoguanamin in Frage.

Als Komponente a) werden vorzugsweise die N-(Methoxymethyl)-, N-(n-Butoxymethyl)- und N-(Isobutoxymethyl)-Derivate von Harnstoff, Melamin, Aethylendicarbamat, Tetramethylendicarbamat, 4,5-Dihydroxyimidazolidin-2-on (1,2-Dihydroxyäthylenharnstoff), 5-Hydroxyhexahydro-2H-pyrimidin-2-on (2-Hydroxypropylenharnstoff), Imidazolidin-2-on (Aethylenharnstoff), Hexahydro-2H-pyrimidin-2-on (1,3-Propylenharnstoff), 4-Hydroxy-5,5-dimethyl-6-isopropyl-hexahydro-2H-pyrimidin-2-on (1-Hydroxy-2,2-dimethyl-3-isopropylenharnstoff), und 2-Methoxyäthylcarbamat eingesetzt.

Die Produkte, hergestellt nach dem erfindungsgemässen Verfahren, können für diverse Beschichtungen verwendet werden. Sie können zum Beispiel in einem organischen Lösungsmittel (oder Lösungsmittelgemisch) gelöst und mit Pigmenten, Coreaktanten oder anderen polymerisierbaren Stoffen vermischt werden, um dann als Anstrichfarben oder Lacke für Holz und Metalle, oder als Drucktinten oder Lacke für Papier und Karton verwendet zu werden. Wahlweise können sie aber auch, falls erwünscht, zusammen mit Pigmenten, Füllstoffen, polymerisierbaren Materialien oder Coreaktanten zu Pulvern mit einer Teilchengrösse von zweckmässig 0,015 bis 500 µm vermahlen werden und als Pulverbeschichtung verwendet werden. Geeignete Coreaktanten enthalten durchschnittlich zwei und mehr alkoholische OH-Gruppen pro Molekül. Es kommen all die Verbindungen in Frage, die man üblicherweise zusammen mit verätherten Aminoplast-Harzen verwendet, so z. B. Alkyd-Polyester- und OH-Gruppen enthaltende Epoxid- und Acrylharze. Es können aber auch Harze mit durchschnittlich zwei und mehr freien Carboxylgruppen pro Molekül zusammen verwendet werden. Sie sind jedoch wegen ihrer geringeren Reaktivität im allgemeinen weniger bevorzugt. Weiterhin sind Harze mit durchschnittlich mindestens zwei Carbonsäureamidgruppen pro Molekül als Coreaktanten geeignet, beispielsweise Copolymere von Styrol und/oder Acrylsäure- oder Methacrylsäureestern, welches in geringen Mengen Acrylsäure- oder Methacrylsäureamid enthalten (GB-PS 1 026 696).

Die Beschichtungsmittel können mittels konventioneller Vorrichtungen appliziert, werden. Nach dem Verdampfen des Lösungsmittels (falls erforderlich) können sie bei Raumtemperatur oder durch Erhitzen, gewöhnlich bei 50 bis 300 °C, vorzugsweise 100 bis 225 °C, gehärtet werden. Die Beschichtungen weisen einen sehr guten Glanz, gute Farbe und Härte, sowie gute Beständigkeit gegen Fett, Flecken und Reinigungsmittel auf.

Ein weiterer Gegenstand der Erfindung ist daher ein Verfahren zur Oberflächenbeschichtung, indem man ein nach dem erfindungsgemässen Verfahren hergestelltes vorverlängertes Harz auf die Oberfläche eines Substrates aufbringt und erhitzt, um dadurch eine harte und vernetzte Beschichtung zu bilden. Gegebenenfalls erhitzt man das vorverlängerte Harz zusammen mit einer Verbindung, welche pro Molekül mindestens zwei alkoholische OH-, Carboxyl- oder Carbonsäureamidgruppen enthält.

Die Erfindung wird durch die folgenden Beispiele illustriert. Alle Teile bedeuten, wenn nicht ausdrücklich anders angegeben, Gewichtsteile. Prozente sind Gewichtsprozente. Die Erweichungspunkte werden mittels einer Platte mit stetig steigender Temperatur, genannt Kofler-Heizbank, bestimmt.

## Beispiel 1

I. Herstellung eines methylierten Dimethylolhexahydro-2H-pyrimidin-2-ons

Ein Gemisch aus 330 g Formalin (36,6 % Formaldehyd) und 200 g Hexahydro-2H-pyrimidin-2-on wird mit einer 4 %-igen wässrigen NaOH-Lösung (0,8 ml) auf pH 8,4 eingestellt und während 1 Stunde auf 60 °C erhitzt. Bedingt durch die Cannizzaro-Reaktion nimmt die Basizität der Mischung ab. Der pH-Wert wird mit einer 20 %-igen wässrigen NaOH-Lösung auf 7,5 eingestellt und die Lösung unter Wasserstrahl-Vakuum erhitzt, bis der Rückstand 320 g wiegt. 640 g Methanol werden zum Rückstand gegeben, und die Temperatur der Lösung wird auf 28 °C eingestellt. 6,0 ml konz. HCl werden zugefügt, und die Mischung wird während 1 Stunde bei 32 °C gerührt. Die Lösung wird erneut mit einer 20 %-igen wässrigen NaOH-Lösung (10,5 ml) auf pH 7,5-8,0 eingestellt und anschliessend unter Wasserstrahl-Vakuum destilliert, bis die Temperatur des Destillationsrückstandes 120 °C erreicht. Der Rückstand wird filtriert, um das Natriumchlorid zu entfernen. Das Filtrat besteht aus 306 g eines weissen, halbfesten, methylierten 1,3-Dimethylol-hexahydro-2H-pyrimidin-2-ons, dessen Methylierungsgrad 100 % beträgt.

II. Vorverlängerung (Advancement)

54,1 g des so erhaltenen Harzes und 27,1 g (0,5 Grammäquivalent, bezogen auf 1 Mol Aminoplast) Benzoguanamin werden gemischt und 15 Minuten bei 100 °C gerührt. 0,1 ml einer 50 %-igen p-Toluolsulfonsäurelösung in Methanol werden zugegeben, um den pH-Wert der Mischung auf 4 einzustellen. Das Erhitzen wird während 1 3/4 Stunden bei 100 °C fortgesetzt, wobei alle entstehenden flüchtigen Stoffe laufend entfernt werden. Anschliessend werden weitere 0,1 ml einer 50 %igen p-Toluolsulfonsäurelösung in Methanol zugefügt, und das Gemisch wird für weitere 3/4 Stunden bei 100 °C erhitzt. Das entstandene Produkt (Erweichungspunkt 62 °C) wird mit 0,17 ml N-Benzyldimethylamin neutralisiert und in eine Aluminiumschale gegossen.

## Beispiel 2

I. Herstellung eines methylierten Dimethylolimidazolidin-2-ons

Man geht analog zum Beispiel 1, Teil I vor, mit dem Unterschied, dass man anstelle von Hexahydro-2H-pyrimidin-2-on 191,1 g (90 %-ige Reinheit) Imidazolidin-2-on verwendet. Das methylierte 1,3-Dimethylolimidazolidin-2-on (Methylierungsgrad 96 %) bleibt nach Entfernen des Natriumchlorids durch Filtrieren als Flüssigkeit zurück.

II. Vorverlängerung

87,0 g dieser Flüssigkeit werden mit 46,7 g (0,5 Grammäquivalent pro Mol Aminoplast) Benzoguanamin vermischt und auf 100 °C erhitzt. Nach 20 Minuten werden der Lösung 0,3 ml einer 50 %-igen p-Toluolsulfonsäurelösung in Methanol zugefügt und damit der pH-Wert auf 4 eingestellt. Man setzt das Erhitzen des Gemisches bei 100 °C fort, wobei alle flüchtigen Stoffe, sobald sie gebildet werden, entfernt werden. Nach 220 Minuten wird das entstandene Produkt (Erweichungspunkt 69 °C) mit 0,15 ml N-Benzyldimethylamin neutralisiert und in eine Aluminiumschale gegossen.

## Beispiel 3

I. Herstellung eines hoch methylierten Dimethylol-4,5-dihydroxyimidazolidin-2-ons

Der pH-Wert eines Gemisches aus 240 g Harnstoff und 580 g einer 40 %-igen wässrigen Glyoxallösung wird mit 1,0 ml einer 20 %-igen wässrigen NaOH-Lösung auf 7,0 eingestellt. Das Gemisch wird während 2 Stunden auf 50 °C erhitzt, wobei der pH-Wert durch ständige Zugabe von wässrigem NaOH auf 7,0 gehalten wird, wie es erforderlich ist. Zu der entstandenen 4,5-Dihydroxyimidazolidin-2-on-Lösung werden 660 g Formalin (36,6 % Formaldehyd) zugefügt, und das Gemisch wird weiterhin bei 70 °C und bei pH 7,0 während 2 Stunden erhitzt. Die Lösung wird abgekühlt und unter Wasserstrahl-Vakuum so lange destilliert, bis der Rückstand 820 g wiegt. Es werden 1 280 g Methanol zugefügt, und die Lösung wird auf 25 °C abgekühlt. 12,0 ml konz. HCl werden zugefügt, und die Reaktion wird während 1 Stunde auf 32 °C fortgesetzt. Die Lösung wird mit 22,2 ml einer 20 %-igen wässrigen NaOH-Lösung auf einen pH-Wert von 7,5 eingestellt und anschliessend unter Wasserstrahl-Vakuum so lange destilliert, bis die Temperatur des Rückstandes 120 °C beträgt. Nachdem das Salz durch Filtrieren entfernt wurde, erhält

man ein methyliertes 1,3-Dimethylol-4,5-dihydroxyimidazolidin-2-on in Form einer gelben, viskosen Flüssigkeit (Methylierungsgrad 99 %).

II. Vorverlängerung

90,6 g der so erhaltenen Flüssigkeit werden mit 41,4 g (0,5 Grammäquivalent pro Mol Aminoplast) Benzoguanamin und 0,4 ml einer 50 %-igen p-Toluolsulfonsäurelösung in Methanol vermischt und bei pH 4 während 5 Stunden auf 100 °C erhitzt. Alle flüchtigen Stoffe werden entfernt, sobald sie gebildet werden. Das Produkt (Erweichungspunkt 66 °C) wird in eine Al-Schale gegossen und abgekühlt.

Beispiel 4

I. Herstellung eines methylierten Dimethylol-4-hydroxy-5,5-dimethyl-6-isopropylhexahydro-2H-pyrimidin-2-ons

82,5 g Formalin (36,6 % Formaldehyd) werden mit 0,2 ml einer 4 %-igen wässrigen NaOH-Lösung auf pH 8,4 eingestellt, mit 93 g 4-Hydroxy-5,5-dimethyl-6-isopropylhexahydro-2H-pyrimidin-2-on versetzt und zuerst während 1 Stunde auf 60 °C, dann während 4 1/2 Stunden auf 80 °C erhitzt. Diese Lösung wird durch Wasserstrahl-Vakuumdestillation auf 137 g Rückstand reduziert. 160 g Methanol werden dem Rückstand zugefügt. Die Lösung wird auf 25 °C abgekühlt und mit 1,5 ml konz. HCl versetzt. Die Reaktion wird während 1 Stunde bei 32 °C vervollständigt. Mit 2,8 ml einer 20 %-igen wässrigen NaOH-Lösung wird der pH-Wert der Lösung auf 8,0 eingestellt, und das Gemisch wird unter Wasserstrahl-Vakuum destilliert, bis der Rückstand eine Temperatur von 120 °C aufweist. Um das Salz zu entfernen, wird der Rückstand filtriert und abgekühlt:

1,3-Bis(methoxymethyl)-4-hydroxy-5,5-dimethyl-6-isopropylhexahydro-2H-pyrimidin-2-on kristallisiert langsam aus. Der Methylierungsgrad beträgt 95 %.

II. Vorverlängerung

81,5 g des erhaltenen Stoffes werden mit 27,8 g (0,5 Grammäquivalent pro Mol Aminoplast) Benzoguanamin und 0,8 ml einer 50 %-igen p-Toluolsulfonsäurelösung in Methanol vermischt. Das Gemisch wird zuerst während 2 Stunden bei pH 4 auf 100 °C, anschliessend während 3 Stunden auf 120 °C erhitzt, wobei alle entstehenden flüchtigen Stoffe laufend entfernt werden. Dem Produkt (Erweichungspunkt 70 °C) werden 0,4 ml N-Benzyldimethylamin zugefügt, und das Gemisch wird in eine Al-Schale gegossen.

Beispiel 5

56,1 g eines hoch methylierten Hexamethylolmelaminharzes (Methylierungsgrad 80 %) werden mit 13,9 g (0,5 Grammäquivalent pro Mol Aminoplast) Benzoguanamin vermischt und auf 100 °C erhitzt. Nach 15 Minuten werden 0,4 ml einer 50 %-igen p-Toluolsulfonsäurelösung in Methanol zugefügt, und das Erhitzen wird während weiteren 75 Minuten bei pH 4 fortgesetzt. Die flüchtigen Stoffe werden entfernt, sobald sie entstehen. Der Rückstand in der Flasche (Erweichungspunkt 60 °C) wird mit 0,34 ml einer 50 %-igen N-Benzyldimethylaminlösung in Methanol versetzt, und das entstandene Produkt wird in eine Al-Schale gegossen.

Beispiel 6

72,0 g eines hoch methylierten Harnstoff/Formaldehyd-Harzes (Molverhältnis 1 : 3,0) mit einem Methylierungsgrad von 70 % werden mit 37,4 g (0,5 Grammäquivalent pro Mol Aminoplast) Benzoguanamin gemischt und bei pH 7,0 während 20 Minuten auf 120 °C erhitzt. Das Produkt hat einen Erweichungspunkt von 80 °C.

Beispiel 7

Es wird gemäss Beispiel 1 verfahren mit dem Unterschied, dass anstelle von Benzoguanamin 22,0 g (0,5 Grammäquivalent pro Mol Aminoplast) Butyroguanamin eingesetzt werden. Die Umsetzung erfolgt bei pH 4 in Gegenwart von 0,26 ml einer 50 %-igen p-Toluolsulfonsäurelösung in Methanol, wobei das Gemisch während 6 Stunden auf 100 °C erhitzt wird. Das Produkt (Erweichungspunkt 70 °C) wird mit 0,26 ml N-Benzyl-dimethylamin neutralisiert.

Beispiel 8

Es wird gemäss Beispiel 1 verfahren mit dem Unterschied, dass anstelle von Benzoguanamin 28,95 g (0,5 Grammäquivalent pro Mol Aminoplast) Phenylacetoguanamin eingesetzt werden. Die Umsetzung

erfolgt bei pH 4 in Gegenwart von 0,28 ml einer 50 %-igen p-Toluolsulfonsäurelösung in Methanol, wobei das Gemisch während 1 1/2 Stunden auf 120 °C erhitzt wird. Das Produkt (Erweichungspunkt 72 °C) wird mit 0,28 ml N-Benzyl-dimethylamin neutralisiert.

Beispiel 9

Es wird gemäss Beispiel 1 verfahren mit dem Unterschied, dass anstelle von Benzoguanamin 17,96 g (0,5 Grammäquivalent pro Mol Aminoplast) Acetoguanamin eingesetzt werden. Die Umsetzung erfolgt bei pH 3,5 in Gegenwart von 0,46 ml einer 50 %-igen p-Toluolsulfonsäurelösung in Methanol, wobei das Gemisch zuerst während 10 Stunden auf 120 °C und anschliessend während 20 Stunden auf 150 °C erhitzt wird. Das Produkt (Erweichungspunkt 75 °C) wird mit 0,23 ml N-Benzyldimethylamin neutralisiert.

Beispiel 10

Es wird gemäss Beispiel 1 verfahren mit dem Unterschied, dass anstelle von Benzoguanamin 33,82 g (0,5 Grammäquivalent pro Mol Aminoplast) Caprinoguanamin eingesetzt werden. Die Umsetzung erfolgt bei pH 4 in Gegenwart von 0,30 ml einer 50 %-igen p-Toluolsulfonsäurelösung in Methanol, wobei das Gemisch während 3 1/2 Stunden auf 120 °C erhitzt wird. Das Produkt (Erweichungspunkt 58 °C) wird mit 0,30 ml N-Benzyl-dimethylamin neutralisiert.

Beispiel 11

Beispiel 6 wird wiederholt mit dem Unterschied, dass anstelle von Benzoguanamin 12,5 g (0,25 Grammäquivalent pro Mol Aminoplast) Acetoguanamin eingesetzt werden. Das Gemisch wird während 1 1/2 Stunden auf 120 °C erhitzt. Das Produkt hat einen Erweichungspunkt von 50 °C.

Beispiel 12

I. Herstellung eines n-butylierten Dimethylolhexahydro-2H-pyrimidin-2-ons

Zu einem Gemisch aus 160 g 1,3-Dimethylolhexahydro-2H-pyrimidin-2-on und 444 g n-Butanol werden bei 30 °C 10 ml konz. HCl zugefügt. Das Rühren bei 30 °C wird während 2 Stunden fortgesetzt, anschliessend wird die Lösung mit 19,5 ml einer 20 %-igen wässrigen NaOH-Lösung auf pH 8,8 eingestellt und unter Wasserstrahl-Vakuum destilliert, bis der Rückstand eine Temperatur von 110 °C erreicht. Der Rückstand wird vom NaCl durch Filtrieren befreit, und aus dem Filtrat werden 229 g eines n-butylierten 1,3-Dimethylolhexahydro-2H-pyrimidin-2-ons erhalten. Das Produkt ist eine schwach gelbe Flüssigkeit; der Grad der Butylierung beträgt 62 %.

II. Vorverlängerung

65,4 g der so erhaltenen Flüsssigkeit werden mit 26,7 g (0,5 Grammäquivalent pro Mol Aminoplast) Benzoguanamin versetzt und während 1 1/2 Stunden bei 120 °C und pH 4,5 in Gegenwart von 0,2 ml einer 50 %-igen p-Toluolsulfonsäurelösung in Methanol und anschliessend während 1 Stunde bei 135 °C gerührt. Das Produkt (Erweichungspunkt 120 °C) wird mit 0,1 ml N-Benzyldimethylamin neutralisiert.

Beispiel 13

Es wird gemäss Beispiel 12 verfahren mit dem Unterschied, dass anstelle von Benzoguanamin 8,92 g (0,25 Grammäquivalent pro Mol Aminoplast) Acetoguanamin eingesetzt werden. Die Umsetzung erfolgt in Gegenwart von 0,14 ml einer 50 %-igen p-Toluolsulfonsäurelösung in Methanol, wobei das Gemisch zuerst während 1 Stunde auf 120 °C, dann 1 Stunde auf 140 °C erhitzt wird. Anschliessend werden 0, 14 ml der p-Toluolsulfonsäurelösung in Methanol zugefügt, und das Erhitzen auf 150 °C wird während 10 Stunden fortgesetzt. Das Produkt (Erweichungspunkt 40 °C) wird mit 0,14 ml N-Benzyldimethylamin neutralisiert.

Beispiel 14

112,5 g eines hoch n-butylierten Harnstoff/Formaldehydharzes (harzbildender Feststoffgehalt 60%), welches im Handel erhältlich ist, werden mit 35,1 g (ca. 0,5 Grammäquivalent Guanamin pro Mol Aminoplast) Benzoguanamin vermischt und auf 110 °C erhitzt. Das n-Butanol wird langsam während 2 Stunden unter Wasserstrahl-Vakuum entfernt. Das Produkt hat einen Erweichungspunkt von 120 °C.

Beispiel 15

1. Herstellung eines methylierten N,N-Dimethylol-2-methoxyäthylcarbamats

Ein Gemisch aus 410 g Formalin (36,6 % Formaldehyd) und 238 g 2-Methoxyäthylcarbamat wird mit 1,5 ml einer 20 %-igen wässrigen NaOH-Lösung auf pH 10,0 eingestellt und während 5 Stunden auf 70 °C erhitzt. Der pH-Wert wird, wenn nötig, durch NaOH-Zugabe auf 10,0 gehalten. 640 g Methanol werden zugegeben, und die Lösung wird auf 25 °C abgekühlt. 10,0 ml konz. HCl werden zugefügt, und die Reaktion wird während 1 Stunde bei 32 °C fortgesetzt. Die Lösung wird mit 18 ml einer 20 %-igen NaOH-Lösung auf pH 8,8 eingestellt und anschliessend unter Wasserstrahl-Vakuum destilliert, bis die Temperatur des Destillationsrückstandes 120 °C erreicht. Man filtriert den Rückstand und erhält eine gelbe Flüssigkeit, welche aus methyliertem N,N-Dimethylol-2-methoxyäthylcarbamat besteht (Methylierungsgrad 68%).

II. Vorverlängerung

74,0 g der so erhaltenen Flüssigkeit und 18,7 g (0,5 Grammäquivalent, bezogen auf 1 Mol Aminoplast) Benzoguanamin werden zusammen mit 0,5 ml einer 50 %-igen p-Toluolsulfonsäurelösung in Methanol während 5 1/2 Stunden bei 110 °C gerührt. Das Rühren wird während 15 Stunden bei 150 °C fortgesetzt. Das Produkt (Erweichungspunkt 40 °C) wird mit 0,5 ml N-Benzyldimethylamin neutralisiert.

Beispiel 16

Die Produkte aus den Beispielen 1 bis 3 werden jeweils mit einem im Handel erhältlichen, festen Epoxidharz vermischt (Epoxidgehalt 1,25 Aequivalent/kg ; das Verhältnis vorverlängerter Aminoplast : Epoxidharz beträgt 80 : 20). Um die Anwendung zu erleichtern, werden die Gemische in Xylol/n-Butanol/Dimethylformamid-Lösungen (Volumenverhältnis 1 : 1 : 1) gelöst, wobei 50 %-ige Lösungen erhalten werden. Die Lösungen werden mittels eines drahtumwickelten Stabes auf Glas- oder Metallplatten appliziert, so dass nasse Beschichtungen von 75 µm Dicke entstehen. Letztere werden während 15 Minuten bei 200 °C gehärtet. Nachdem die Beschichtungen über Nacht einer relativen Feuchtigkeit von 65 % bei 15,5 °C ausgesetzt wurden, werden jeweils die Pendelhärte nach Persoz und die Reibfestigkeit gegenüber Aceton oder Xylol gemessen. Die Pendelhärte nach Persoz wird gemäss ISO* 1522-1973e gemessen. Die Angabe der Pendelhärte erfolgt in sec. Um die Reibfestigkeit zu bestimmen, reibt man einen mit dem entsprechenden Lösungsmittel getränkten Wattebausch 20 mal auf der Testfläche. Die Ergebnisse sind in Tabelle 1 zusammengestellt.

Tabelle I

| Produkt von Beispiel | Härte nach Persoz (sec.) | Reibfestigkeit | |
|---|---|---|---|
| | | Aceton | Xylol |
| 1 | 329 | leicht erweicht | sehr leicht erweicht |
| 2 | 363 | " | " |
| 3 | 405 | " | " |

*ISO = International Standard Organisation

Beispiel 17

Beispiel 16 wird wiederholt, jedoch mit dem Unterschied, dass das Epoxidharz durch «Polyester A», ein festes OH-haltiges Polyesterharz (OH-Gehalt 3,4 Mol/kg ; hergestellt auf herkömmliche Weise aus Dimethylterephthalat, 1,4-Cyclohexandimethanol, Neopentylglykol und Trimethylolpropan im Molverhältnis 4 : 1 : 2 : 2), ersetzt wird. Die Produkte aus den Beispielen 1 bis 3 werden jeweils mit dem Polyester im Verhältnis 30 : 70 oder 80 : 20 gemischt. Die Ergebnisse sind in Tabelle II zusammengefasst.

(Siehe Tabelle II, Seite 9 f.)

Tabelle II

| Produkt von Beispiel | Verhältnis Aminoplast:Polyester A | Härte nach Persoz (sec.) | Reibfestigkeit | |
|---|---|---|---|---|
| | | | Aceton | Xylol |
| 1 | 30:70 | 339 | teilweise entfernt | leicht erweicht |
| 1 | 80:20 | 348 | keine Wirkung | keine Wirkung |
| 2 | 30:70 | 317 | sehr leicht erweicht | keine Wirkung |
| 2 | 80:20 | 368 | keine Wirkung | keine Wirkung |
| 3 | 30:70 | 352 | teilweise entfernt | leicht erweicht |
| 3 | 80:20 | 368 | leicht erweicht | keine Wirkung |

Beispiel 18

Beispiel 16 wird wiederholt, jedoch mit dem Unterschied, dass das Epoxidharz durch ein im Handel erhältliches, OH-haltiges Acrylsäureharz ersetzt wird. Die Produkte aus den Beispielen 1 bis 3 werden jeweils mit dem Acrylsäureharz im Verhältnis 80 : 20 vermischt. Zur Bestimmung der Flexibilität führt man den Dornbiegetest** aus, indem das Teststück um einen Dorn gebogen wird. Man verwendet Dorne mit abnehmendem Durchmesser und notiert den kleinsten Durchmesser (in mm), bei dem durch das Biegen in der Beschichtung keine Rissbildung verursacht wird oder die Rissbildung gerade erst beginnt.

Die Ergebnisse sind in Tabelle III zusammengestellt.

Tabelle III

| Produkt von Beispiel | Härte nach Persoz (sec.) | Dornbiegetest (mm) | Reibfestigkeit | |
|---|---|---|---|---|
| | | | Aceton | Xylol |
| 1 | 324 | 13 bestanden | keine Wirkung | keine Wirkung |
| 2 | 297 | 9 " | leicht erweicht | sehr leicht erweicht |
| 3 | 305 | 8 " | leicht erweicht | sehr leicht erweicht |

Beispiel 19

Beispiel 16 wird wiederholt, jedoch mit dem Unterschied, dass anstelle der Produkte der Beispiele 1 bis 3 die Produkte der Beispiele 4 und 6 bis 14 verwendet werden. Die Ergebnisse sind in Tabelle IV festgehalten.

** gemäss British Standard 3900, Teil E 1, unter Verwendung des Apparates Typ 1

Tabelle IV

| Produkt von Beispiel | Härte nach Persoz (sec.) | Reibfestigkeit | |
|---|---|---|---|
| | | Aceton | Xylol |
| 4 | 359 | entfernt | erweicht |
| 6 | 343 | keine Wirkung | keine Wirkung |
| 7 | 369 | leicht erweicht | " " |
| 8 | 361 | keine Wirkung | " " |
| 9 | 339 | leicht erweicht | sehr leicht erweicht |
| 10 | 344 | keine Wirkung | keine Wirkung |
| 11 | 305 | " " | " " |
| 12 | 318 | leicht erweicht | sehr leicht erweicht |
| 13 | 297 | keine Wirkung | keine Wirkung |
| 14 | 309 | sehr leicht erweicht | keine Wirkung |

Beispiel 20

Beispiel 17 wird wiederholt, jedoch mit dem Unterschied, dass anstelle der Produkte der Beispiele 1 bis 3 die Produkte der Beispiele 6 bis 15 verwendet werden und das Verhältnis vorverlängerter Aminoplast : Polyester 80 : 20 beträgt. Ferner wird der Dornbiegetest, wie im Beispiel 18 beschrieben durchgeführt. Die Ergebnisse sind in Tabelle V zusammengefasst.

Tabelle V

| Produkt von Beispiel | Härte nach Persoz (sec.) | Dornbiegetest (mm) | Reibfestigkeit | |
|---|---|---|---|---|
| | | | Aceton | Xylol |
| 6 | 343 | 13 nicht bestanden | keine Wirkung | keine Wirkung |
| 7 | 346 | 6,4 bestanden | " | " |
| 8 | 356 | 3,2 " | " | " |
| 9 | 335 | 13 " | " | " |
| 10 | 337 | 1,6 " | " | " |
| 11 | 307 | 13 nicht bestanden | " | " |
| 12 | 331 | 8,0 bestanden | " | " |
| 13 | 303 | 1,6 " | " | " |
| 14 | 296 | 13 nicht bestanden | " | " |
| 15 | 273 | 13 " | erweicht | leicht erweicht |

Beispiel 21

Beispiel 18 wird wiederholt, jedoch mit dem Unterschied, dass anstelle der Produkte der Beispiele 1 bis 3 die Produkte der Beispiele 6 bis 14 verwendet werden. Die Ergebnisse sind in Tabelle VI zusammengestellt.

Tabelle VI

| Produkt von Beispiel | Härte nach Persoz (sec.) | Dornbiegetest (mm) | Reibfestigkeit | |
|---|---|---|---|---|
| | | | Aceton | Xylol |
| 6 | 343 | 13 nicht bestanden | keine Wirkung | keine Wirkung |
| 7 | 320 | 8 bestanden | " | " |
| 8 | 310 | 6,4 " | " | " |
| 9 | 320 | 13 nicht be- | erweicht | erweicht |
| 10 | 320 | 1,6 bestanden | keine Wirkung | keine Wirkung |
| 11 | 303 | 6,4 " | leicht erweicht | erweicht |
| 12 | 267 | 6,4 " | keine Wirkung | keine Wirkung |
| 13 | 292 | 1,6 " | " | " |
| 14 | 265 | 13 nicht bestanden | " | " |

Beispiel 22

Beispiel 17 wird wiederholt, jedoch mit dem Unterschied, dass anstelle der Produkte der Beispiele 1 bis 3 das Produkt des Beispiels 5 verwendet wird und das Verhältnis vorverlängerter Aminoplast : Polyester 1 : 1 beträgt. Die ausgehärtete Beschichtung zeigt eine Härte (nach Persoz) von 341 Sekunden und keine Einwirkung durch Reiben mit Aceton und Xylol.

Beispiel 23

Es wird ein pulverförmiges Beschichtungsmaterial hergestellt, welches das Produkt von Beispiel 10, sowie als Coreaktanten den Polyester B enthält. Polyester B ist ein im Handel erhältlicher, gesättigter, ölfreier, alkoholische OH-Gruppen enthaltender, verzweigter Polyester (erhältlich unter dem Handelsnahmen « Uralac P 2504 » von Synthetic Resins Ltd., Speke, Liverpool, Grossbritannien). Polyester B hat eine Säurezahl von weniger als 10 mg KOH/g (gemessen nach ISO 2114) und eine Hydroxyzahl von 30-40 mg KOH/g (gemessen nach ASTM D 1544-68).

Das Mischen der Komponenten erfolgt durch Trockenmischen, an das sich ein Heiss-Schmelz-Strangpressen in einem « Ko-Kneter »® der Firma Buss (Zylindertemperatur 95 °C ; Schneckentemperatur 40 °C) anschliesst. Das extrudierte Material wird auf Raumtemperatur abgekühlt, zerkleinert und auf eine Korngrösse von unter 75 µm gemahlen. Der Hauptteil des Materials hat eine Korngrösse von 20 bis 75 µm. Die Mischung setzt sich wie folgt zusammen :

| | |
|---|---|
| Produkt von Bsp. 10 | 145 Teile |
| Polyester B | 145 Teile |
| Polyacrylsäure-Harz<br>(ein handelsübliches Fliesshilfsmittel) | 5 Teile |
| Benzoin (als Verlaufmittel) | 3 Teile |
| Titandioxid | 200 Teile. |

Die Mischungen werden mittels einer elektrostatischen Pulver-Sprühvorrichtung auf Stahlplatten und auf mit Chromat behandelte Aluminiumplatten gesprüht und bei 200 °C 15 Minuten gehärtet. Die erhaltenen 50 µm dicken Beschichtungen werden wie folgt geprüft :

Die Beständigkeit gegen Aethylmethylketon wird in der Weise bestimmt, dass man die Platten 20 mal Doppelreibungen mit einem mit Aethylmethylketon getränkten Wattebausch aussetzt.

Der « Glanz » wird nach der Methode BS 3900 Teil D2 (1967) unter Anwendung eines Einfallswinkels von 60° bestimmt.

Die « Flexibilität » wird mit dem bereits beschriebenen Dornbiegetest bestimmt, wobei man einen Dorn mit 12 mm Durchmesser verwendet und den Winkel notiert, bei der in der Beschichtung gerade noch keine Rissbildung auftritt.

Ergebnisse

| | |
|---|---|
| Aethylmethylketon-Widerstand : | 12 mm bestanden |
| % Glanz : | 43 |
| Flexibilität : | 120°. |

**Ansprüche**

1. Verfahren zur Herstellung eines vorverlängerten, verätherten Aminoplast-Harzes durch Umsetzung

a) eines verätherte N-Methylolgruppen enthaltenden Harnstoffes, cyclischen Harnstoffes, Carbamats oder Melamins der Formel I, II oder III

$$ROCH_2N(R^2)—R^1—N(R^3)CH_2OR \qquad (I)$$

$$\left[(ROCH_2)_m N(H)_p\text{-}COO\right]_n R^4 \qquad (II)$$

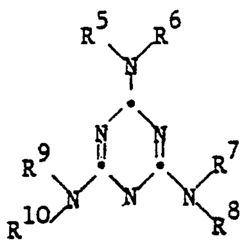

(III)

worin R Wasserstoff oder $C_1$-$C_6$ Alkyl bedeutet, mit der Bedingung, dass mindestens 50 % der Symbole R in den Gruppen $—CH_2OR$ der jeweiligen Formeln I, II oder III Alkyl sind, $R^1$ eine Carbonylgruppe ist und $R^2$ und $R^3$ jeweils gleich oder verschieden sind und Wasserstoff, die Gruppe $—CH_2OR$ oder zusammen eine zweiwertige Alkylkette mit 2 bis 4 C-Atomen bedeuten, wobei die Alkylkette mit 1 oder 2 OH-Gruppen oder mit 1 bis 4 Alkylgruppen mit bis zu 5 C-Atomen substituiert sein kann, oder $R^1$ Methylen oder Aethylen ist und $R^2$ und $R^3$ die Gruppe $—COOR^{11}$ bedeuten, n die Zahl 1 oder 2 ist, und falls n die Zahl 1 ist, p Null bedeutet, m die Zahl 2 ist und $R^4$ $C_1$-$C_{18}$ Alkyl bedeutet, welches mit 1 oder 2 OH-Gruppen oder mit einer $C_1$-$C_5$ Alkoxy-Gruppe substituiert sein kann, oder falls n gleich 2 ist, p Null bedeutet und m die Zahl 2 ist, oder p und m 1 sind, $R^4$ eine Gruppe $C_qH_{2q}$ ist, worin q eine Zahl von 1 bis 6 bedeutet, oder ein Arylen mit 6 bis 12 C-Atomen darstellt, die Symbole $R^5$ bis $R^{10}$ gleich oder verschieden sind und Wasserstoff oder eine Gruppe $—CH_2OR$ bedeuten, mit der Bedingung, dass nicht mehr als 4 der Symbole $R^5$ bis $R^{10}$ für Wasserstoff stehen, $R^{11}$ Alkyl mit bis zu 18 C-Atomen ist, welches mit 1 oder 2 OH-Gruppen oder mit einer $C_1$-$C_5$ Alkoxy-Gruppe substituiert sein kann, mit

b) einem Guanamin der Formel IV

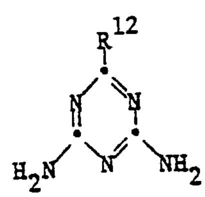

(IV)

worin $R^{12}$ $C_1$-$C_{18}$ Alkyl oder Aralkyl, $C_6$-$C_8$ Aryl oder eine Gruppe der Formel V

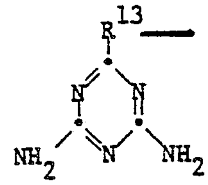

(V)

bedeutet und $R^{13}$ eine Gruppe $C_zH_{2z}$ oder Phenylen bedeutet, wobei z eine Zahl von 2 bis 16 ist, bei einem pH-Wert von 2,5 bis 9, wobei man pro 1 Mol der Komponente a) 0,05 bis 1 Grammäquivalent der Komponente b) einsetzt.

2. Verfahren gemäss Anspruch 1, dadurch gekennzeichnet, dass die Umsetzung bei einem pH-Wert von 3 bis 6 erfolgt.

3. Verfahren gemäss Anspruch 1, dadurch gekennzeichnet, dass man pro 1 Mol der Komponente a) 0,1 bis 0,7 Grammäquivalent der Komponente b) einsetzt.

4. Verfahren gemäss Anspruch 1, dadurch gekennzeichnet, dass man das Reaktionsgemisch der Komponente a) und b) auf 80 bis 140 °C erhitzt und während 2 bis 6 Stunden bei dieser Temperatur hält.

5. Verfahren gemäss Anspruch 1, dadurch gekennzeichnet, dass man als Komponente a) ein N-(Methoxymethyl)-, N-(n-Butoxymethyl)- oder N-(Isobutoxymethyl)-Derivat von Harnstoff, Melamin, Aethylendicarbamat, Tetramethylendicarbamat, 4,5-Dihydroxyimidazolidin-2-on, 5-Hydroxyhexahydro-2H-pyrimidin-2-on, Imidazolidin-2-on, Hexahydro-2H-pyrimidin-2-on, 4-Hydroxy-5,5-dimethyl-6-isopropyl-hexahydro-2H-pyrimidin-2-on, oder 2-Methoxyäthylcarbamat einsetzt.

6. Verfahren gemäss Anspruch 1, dadurch gekennzeichnet, dass man als Komponente b) Caprinoguanamin, Benzoguanamin, Acetoguanamin, Butyroguanamin, Phenylacetoguanamin, Adipoguanamin oder Succinoguanamin einsetzt.

7. Ein vorverlängertes, veräthertes Aminoplast-Harz, welches durch das Verfahren nach Anspruch 1 erhalten wird, mit einem Erweichungspunkt von 60 bis 120 °C.

8. Verfahren zur Oberflächenbeschichtung, dadurch gekennzeichnet, dass man ein vorverlängertes Harz, welches nach dem Verfahren gemäss Anspruch 1 hergestellt wird auf die Oberfläche eines Substrates aufbringt und erhitzt, um dadurch eine harte und vernetzte Beschichtung zu bilden.

9. Verfahren gemäss Anspruch 8, dadurch gekennzeichnet, dass man das vorverlängerte Harz zusammen mit einer Verbindung erhitzt, welche pro Molekül mindestens zwei alkoholische OH-, Carboxyl- oder Carbonsäureamidgruppen enthält.

**Claims**

1. A process for producing an advanced etherified aminoplast resin, which process comprises reacting, at a pH value of 2.5 to 9,

a) an etherified N-methylolated urea, cyclic urea, carbamate or melamine of the formula I, II or III

$$ROCH_2N(R^2){-}R^1{-}N(R^3)CH_2OR \qquad (I)$$

$$\left[(ROCH_2)_mN(H)_p{-}COO\right]_n{-}R^4 \qquad (II)$$

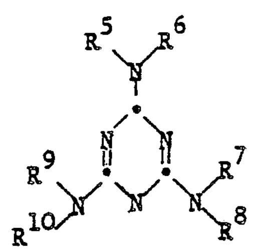

(III)

wherein R is hydrogen or $C_1$-$C_6$-alkyl, with the proviso that at least 50 % of the symbols R in the groups $-CH_2OR$ of the formula I, II or III are alkyl, $R^1$ is a carbonyl group, and $R^2$ and $R^3$ are identical or different and are each hydrogen or the group $-CH_2OR$, or together they are a bivalent alkyl chain having 2 to 4 C atoms, which can be substituted by 1 or 2 OH groups or by 1 to 4 alkyl groups each having up to 5 C atoms, or $R^1$ is methylene or ethylene and $R^2$ and $R^3$ are each the group $-COOR^{11}$, n is 1 or 2, and if n is 1 p is zero, m is 2 and $R^4$ is $C_1$-$C_{18}$-alkyl which can be substituted by 1 or 2 OH groups or by a $C_1$-$C_5$-alkoxy group, or if n is 2 p is zero and m is 2, or p and m are each 1, and $R^4$ is a group $C_qH_{2q}$, wherein q is a number from 1 to 6 or an arylene group having 6 to 12 C atoms, the symbols $R^5$ to $R^{10}$ are identical or

different and are each hydrogen or a group —$CH_2OR$, with the proviso that not more than 4 of the symbols $R^5$ to $R^{10}$ are hydrogen, $R^{11}$ is alkyl having up to 18 C atoms, which can be substituted by 1 or 2 OH groups or by a $C_1$-$C_5$-alkoxy group, with

b) a guanamine of the formula IV

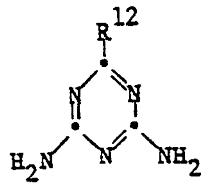

(IV)

wherein $R^{12}$ is $C_1$-$C_{18}$-alkyl or aralkyl, $C_6$-$C_8$-aryl or a group of the formula V

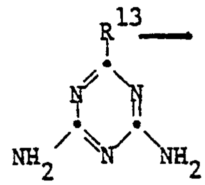

(V)

and $R^{13}$ is a group $C_zH_{2z}$ or phenylene, z being a number from 2 to 16, the amount of component b) used being 0.05 to 1 gram equivalent per 1 mol of component a).

2. A process according to Claim 1, wherein the reaction is performed at a pH value of 3 to 6.

3. A process according to Claim 1, wherein 0.1 to 0.7 gram equivalent of component b) is used per 1 mol of component a).

4. A process according to Claim 1, wherein the reaction mixture of components a) and b) is heated to 80 to 140 °C and is held at this temperature for 2 to 6 hours.

5. A process according to Claim 1, wherein the component a) used is : an N-(methoxymethyl), N-(n-butoxymethyl) or N-(isobutoxymethyl) derivative of urea, melamine, ethylene dicarbamate, tetramethylene dicarbamate, 4,5-dihydroxyimidazolidin-2-one, 5-hydroxyhexahydro-2H-pyrimidin-2-one, imidazolidin-2-one, hexahydro-2H-pyrimidin-2-one, 4-hydroxy-5,5-dimethyl-6-isopropyl-hexahydro-2H-pyrimidin-2-one or 2-methoxyethyl carbamate.

6. A process according to Claim 1, wherein the component b) used is : caprinoguanamine, benzoguanamine, acetoguanamine, butyroguanamine, phenylacetoguanamine, adipoguanamine or succinoguanamine.

7. An advanced etherified aminoplast resin which is obtained by the process according to Claim 1, which has a softening point of 60 to 120 °C.

8. A process for coating a surface, which process comprises applying an advanced resin produced by the process according to Claim 1 to the surface of a substrate, and heating the resin to form a hard, crosslinked coating.

9. A process according to Claim 8, wherein the advanced resin is heated together with a compound which contains per molecule at least two alcoholic OH groups, carboxylic acid groups or carboxylic acid amide groups.

**Revendications**

1. Procédé de préparation d'une résine d'amonoplaste éthérifiée pré-allongée par réaction

a) d'une urée ou d'une urée cyclique, d'un carbamate ou d'une mélamine, à groupes N-méthyloliques éthérifiés, de formule I, II ou III ci-après

$$ROCH_2N(R^2)—R^1—N(R^3)CH_2OR \quad (I)$$

$$\left[(ROCH_2)_mN(H)_p\text{-}COO\right]_n R^4 \quad (II)$$

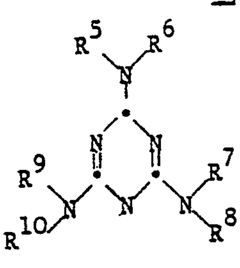

(III)

dans lesquelles R désigne l'hydrogène ou un alkyle en $C_1$-$C_6$, avec la condition qu'au moins 50 % des symboles R des groupes —$CH_2OR$, dans les formules I, II et III, soient des groupes alkyles, $R^1$ est un groupe carbonyle et $R^2$ et $R^3$, qui peuvent être identiques ou différents l'un de l'autre, sont chacun l'hydrogène ou un groupe —$CH_2OR$ ou bien forment ensemble une chaîne alkylène en $C_2$ à $C_4$ pouvant avoir comme substituants un ou deux groupes OH ou 1 à 4 alkyles pouvant avoir jusqu'à 5 atomes de carbone, ou encore $R^1$ est un groupe méthylène ou éthylène et $R^2$ et $R^3$ un groupe —$COOR^{11}$, n est le nombre 1 ou 2 et si n = 1, p est nul, m est le nombre 2 et $R^4$ est un alkyle en $C_1$-$C_{18}$ pouvant être substitué par un ou deux groupes OH ou par un alcoxy en $C_1$-$C_5$, ou bien si n = 2, p est nul et m est le nombre 2, ou encore p et m sont chacun le nombre 1, et $R^4$ est un groupe $C_qH_{2q}$, q étant un nombre de 1 à 6, ou un groupe arylène en $C_6$ à $C_{12}$, et $R^5$ à $R^{10}$, qui peuvent être identiques ou différents les uns des autres, représentent chacun l'hydrogène ou un groupe —$CH_2OR$, avec la condition qu'au maximum 4 des symboles $R^5$ à $R^{10}$ représentent l'hydrogène, $R^{11}$ étant un alkyle pouvant avoir jusqu'à 18 atomes de carbone et pouvant être substitué par un ou deux groupes OH ou par un alcoxy en $C_1$-$C_5$ avec b) une guanamine de formule IV

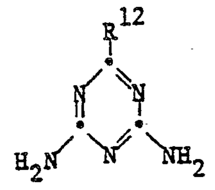

(IV)

$R^{12}$ étant un alkyle ou un aralkyle en $C_1$-$C_{18}$ ou un aryle en $C_6$-$C_8$ ou encore un groupe de formule V

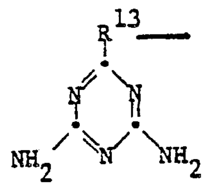

(V)

(dans lequel $R^{13}$ désigne un groupe $C_zH_{2z}$ ou un groupe phénylène, z étant un nombre de 2 à 16), à un pH de 2,5 à 9, avec, par mole de la composante a), 0,05 à 1 équivalent-gramme de la composante b).

2. Procédé selon la revendication 1 caractérisé en ce que la réaction est effectuée à un pH compris entre 3 et 6.

3. Procédé selon la revendication 1 ou 2 caractérisé en ce que l'on met en jeu 0,1 à 0,7 équivalent-gramme de la composante b) par mole de la composante a).

4. Procédé selon l'une quelconque des revendications 1 à 3, caractérisé en ce que l'on chauffe le mélange des composantes a) et b) entre 80 et 140 °C et on le maintient à cette température pendant 2 à 6 heures.

5. Procédé selon l'une quelconque des revendications 1 à 4, caractérisé en ce que l'on utilise comme composante a) un dérivé N-(méthoxyméthylique), N-(n-butoxyméthylique) ou N-(isobutoxyméthylique) de l'urée, de la mélamine, du dicarbamate d'éthylène ou du dicarbamate de tétraméthylène, de la 4,5-dihydroxyimidazolidine-2-one, de la 5-hydroxyhexahydro-2H-pyrimidine-2-one, de l'imidazolidine-2-one, de l'hexahydro-2H-pyrimidine-2-one, de la 4-hydroxy-5,5,-diméthyl-6-isopropyl-hexahydro-2H-pyrimidine-2-one ou du carbamate de 2-méthoxyéthyle.

6. Procédé selon l'une quelconque des revendications 1 à 5, caractérisé en ce que l'on utilise comme composante b) la caproguanamine, la benzoguanamine, l'acétoguanamine, la butyroguanamine, la phénylacétoguanamine, l'adipoguanamine ou la succinoguanamine.

7. Résine d'aminoplaste éthérifiée pré-allongée qui a été obtenue par un procédé selon l'une quelconque des revendications précédentes, ayant un point de ramollissement de 60 à 120 °C.

8. Procédé de revêtement de surfaces caractérisé en ce que l'on applique sur la surface d'un substrat une résine pré-allongée qui a été obtenue par un procédé selon l'une quelconque des revendications 1 à 6, et on chauffe pour former un revêtement dur réticulé.

9. Procédé selon la revendication 8, caractérisé en ce que l'on chauffe la résine pré-allongée avec un composé ayant par molécule au moins deux groupes OH alcooliques, carboxyle ou carboxamide.